# EUROPEAN PATENT APPLICATION

(11) **EP 1 624 303 A2**
(43) Date of publication of application: **08.02.2006**
(21) Application number: 05254837.7
(22) Date of filing: 03.08.2005
(51) Int. Cl.: G01N 33/48

(54) **In-Vitro diagnostics**

(30) Priority: 04.08.2004 GB 0417395; 08.10.2004 GB 0422326
(71) Applicant: IMI VISION LIMITED, Alcester, Warwickshire B49 6EU (GB)
(72) Inventor: Bhimani, Alan, Birminghan B30 2UG (GB); Hunter, John, Roger, MN 55374 (US); Rathbone, David, Stratford-upon-Avon, Warwickshire (GB)
(74) Representative: Wightman, David Alexander

(57) **Abstract**

A method for controlling dispense of a flowable reagent in an in-vitro diagnostic system comprising the steps of: placing in the diagnostic system at least one cartridge comprising a reservoir of reagent and embodying identification means, said identification means comprising information pertinent to the reagent contained within the reservoir, the diagnostic system automatically reading the information contained within the said identification means and using the information within a control system to control the diagnostic system and dispense of the reagent. The information contained within the identification means consists of at least one of: the identification of the reagent within the cartridge; the expiry date of the cartridge, the active shelf life of the reagent (the shelf life of the reagent once the cartridge has been placed in the diagnostic system), the volume of the reagent in the reservoir, data identifying the origin of the reagent (e.g. batch number, date, location) and the maximum storage temperature of the reagent.

## Description

This invention relates to improvements in or relating to the dispensing of a flowable reagent in an in-vitro diagnostic system.

In vitro diagnostic systems are known and commonly comprise the stages of placing a sample of a body fluid, or component thereof, in a vessel, adding a quantity of one or more reagents, allowing the sample and reagent a certain incubation time and using any one of a number of methods known in the art of analysing the sample after the incubation period.

Various reagents are used in the process which may include, for example, enzymes and proteins. Some of the reagents are fairly long lived whereas others have a limited shelf life. Further, if the wrong reagents are used, for example by human error when loading the reagents into the machine then the results of the diagnostic will be faulty. This is clearly not acceptable in the medical field. Another problem associated with some reagents, particularly some enzymes, is that they are temperature sensitive and can deteriorate if they are not stored in the correct temperature conditions.

It is the purpose of this invention to provide a more secure way of ensuring safety and accuracy of the use of reagents in in-vitro diagnostic systems.

According to the present invention there is provided a method for dispensing a flowable reagent, in an in-vitro diagnostic system, comprising the steps of:
placing in the diagnostic system at least one cartridge comprising a reservoir of reagent and embodying identification means comprising information pertinent to the reagent contained within the reservoir; and
the diagnostic system automatically reading the information contained in the said identification means and using the information in the control of the diagnostic system and dispense of the reagent;
the cartridge further containing a means of detecting if the temperature rises above, or falls below, one or more predetermined temperatures.

Preferably, the cartridge also comprises a disposable sanitary pump, whereby the reagent only contacts the disposable pump, and the diagnostic system reads information on the cartridge and uses it in the control of the diagnostic system and the driving of the disposable pump for dispensing the reagent.

Preferably, the information contained within the identification means comprises at least one of: the identification of the reagent within the cartridge; the expiry date of the reagent, the active shelf life of the reagent (the shelf life of the reagent once the cartridge has been placed in the diagnostic system), the volume of the reagent in the reservoir, data identifying the origin of the reagent (e.g. batch number, date, location) and maximum storage temperature of the reagent.

The automatic reading of the information reduces scope for human error. For example, where the cartridge has the identity of the contents embedded in its identification and the diagnostic system is able automatically to read the identity of the contents, the scope for human error in loading the wrong reagent is eliminated.

In a preferred method of the invention, the expiry date of the reagent is embedded in the identification means, the diagnostic system automatically reads this expiry date, and the control system will not allow the reagent to be used in the diagnostic system if it is past its expiry date. This again eliminates the possibility of human error in using out of date reagents.

In a preferred method of the invention, the identification means contains information relating to the active shelf life (the shelf life of the reagent once it has been placed into the diagnostic system) of the reagent. Even where the expiry date of a reagent is in the future, many reagents will have a shorter life once the seals have been broken when it is inserted into the system or first used. By each cartridge containing information relating to the active shelf life, the system can automatically know when the reagent is expired and signal that it needs to be changed, whether or not there is still reagent remaining in the cartridge.

In one preferred method the information contained within the identification means is permanently associated with the cartridge and is read by the diagnostic system.

Preferably, the identification means associated with each cartridge is, or contains, a radio frequency identification (RFID) tag, and the diagnostic system contains a reader for reading the RFID tag.

Preferably, in the method of the invention a plurality of cartridges are placed in the diagnostic system and each position in the system capable of receiving a cartridge has a reader associated with it and only detects and reads information from the RFID tag on a cartridge when it is in close proximity to the reader. Preferably the reader includes a short range reader circuit. Preferably the short range reader circuit includes an operating range limited to a few centimetres such that the reader does not communicate with the cartridge, and therefore does not read the information contained within the tag on the cartridge, until the cartridge is substantially inserted into the diagnostic system. Preferably the short range reader circuit operates at a single operating frequency, said single frequency preferably being above 13MHz thereby enabling the use of a low powered reader circuit.

In an alternative preferred method, the information is stored on a bar code located on an outer surface of the container or alternatively it may be stored in magnetic form.

In an alternate preferred method, the information is initially written onto identification means permanently associated with the cartridge and the diagnostic system includes a reader/writer such that the diagnostic system can read the information on the cartridge and then write new information on, or overwrite existing information back to, the cartridge.

Preferably the identification means is a "universal data tag", hereafter "tag", comprising memory and/or processor electronics, and is attached to the cartridge and conforms to a predetermined physical size independent of its electronic and/or connective functionality, thus enabling the memory and/or processor electronics used within the tag to be selected from different technologies for different commercial or technical reasons without the necessity to modify the cartridge case to which the tag is attached.

Preferably the tag consists of a printed circuit board on which the memory and/or processor electronics are provided, the printed circuit board being capable of encompassing a range of different connection methods for communicating with the reader/writer.

In a preferred embodiment the printed circuit board contains a printed 1000µH inductor for inductive non contact connection between the memory and/or processor electronics and the reader/writer, allowing for the use of radio frequency identification (RFID) type devices ranging from 125 kHz to 13.56 kHz operating frequency. Preferably the printed circuit board is a double sided board, having the inductor mounted on one side and the memory and/or processor electronics mounted on the other. Preferably the diagnostic system incorporates a RFID reader/writer.

In an alternative preferred arrangement the printed circuit board has a plurality of contact pads for contacting with physical spring contacts on the diagnostic system, enabling the diagnostic system to read and write information from and to the tag on the disposable cartridge.

Preferably the memory and/or processor electronics comprises an electronic chip means in the form of an Electro-Erasable-Programmable-Read Only Memory (EEPROM) chip. In a preferred arrangement the EEPROM has four contacts: a ground, a positive volts in and two signal contacts. Preferably a number of independent pieces of information are read from and programmed to the EEPROM in a serial addressed manner.

In an alternative arrangement the electronic chip means is a two contact EEPROM, the limitation to two contacts reducing the risk of having a bad connection, said two connection EEPROM having the ability to generate its own supply by charging an internal capacitor from the positive voltage sing from the read write data sent to the electronic chip means, thus eliminating the need for separate dedicated power contacts.

In a further preferred embodiment the tag can be used in an active role wherein a small central processor is used in combination with a battery power source. Preferably the battery is a separate component located on the disposable cartridge and the circuit board contains contacts to connect to the battery. In an alternative preferred arrangement the battery is an integral part of the circuit board. The connection to the diagnostic system may be either a contact or a non-contact system.

Alternatively the information may be stored on a read/write magnetic strip. Other means of storing data in an amendable form will be clear to those in the art.

Preferably, in the method of the invention, the diagnostic system initially reads the volume of the reservoir, and then as the reagent is used, calculates the volume remaining and writes this information back to the identification means. In a preferred method the diagnostic system writes back to the identification means every time some of the reagent is used. In an alternative preferred method the diagnostic system calculates the volume of reagent remaining as it is used, and writes this back to the identification means prior to the cartridge being removed from the system.

Preferably, in the method of the invention, the diagnostic system reads the active shelf life of the reagent when the cartridge is first inserted into the diagnostic system, and using the date of insertion and the active shelf life calculates the expiry of the active shelf life (active expiry date) and writes this back to the identification means. Preferably the diagnostic system will not dispense any more reagent from a particular cartridge once the active expiry date has passed.

In the method of the invention, therefore, a cartridge can be placed in the diagnostic system and at some point later, removed in a partially full state. When later reinserted into the diagnostic system, and where the relevant information has previously been written back to the cartridge, the system will be able to read the volume remaining, and hence raise a signal when the cartridge needs replacing, and will also know the active expiry date of the reagent and if this has passed during the period between the cartridge being removed and being reinserted, will not dispense the reagent which has passed its active expiry date.

Preferably, in the method of the invention, the means of detecting if the temperature rises above, or falls below one or more predetermined temperatures of the identification means, and rising above, or falling below, one or more of the predetermined temperatures will influence the signal received when the diagnostic system reads the identification means when the cartridge is located within the diagnostic system.

Preferably the means of detecting the temperature comprises a temperature sensor provided on the circuit board. The circuit board may additionally comprise a pressure sensor or a humidity sensor.

Preferably the temperature sensor comprises a dedicated circuit containing for example a thermal fuse. The temperature sensor may alternatively comprise a dedicated circuit containing an electronic temperature monitoring component, such as a thermistor. Alternatively the temperature sensor may operate by way of selection of material composition within the identification means, for example if a magnetic identification means is used the material could lose a part of its magnetic coding at a certain temperature.

Preferably the circuit board monitors the signals from the sensor or sensors and by tracking the signals can determine if the cartridge has been stored or transported outside predetermined storage conditions. This is particularly relevant to reagents where there may be a critical storage temperature, for example between 4 and 8 degrees centigrade, and the outcome of tests may be wrong if the reagent has been stored outside of those temperatures. By means of the on-board battery the conditions can be monitored even when the cartridge is not in situ on the diagnostic system. In a preferred arrangement the electronics includes a clock which can monitor the period of time for which the reagent is stored outside of its storage temperature and this can be used in conjunction with the temperature to determine if the reagent can still be used. For example if a reagent goes marginally outside its storage temperature for a short period of time then it may not degrade where as if it is maintained marginally outside its temperature range for an elongated period of time then it may degrade sufficiently to give a false diagnostic result.

The invention will now be described, by way of example only, with reference to the following drawings in which:
**Figure 1** is a perspective view of a disposable reagent cartridge in accordance with the invention;
**Figure 2** is a perspective view of the underside of the disposable reagent cartridge showing the location of the identification means;
**Figure 3** is an exploded view of a cartridge showing the integral pumping means;
**Figure 4** shows a flexible container for containing the reagent within a cartridge of the invention;
**Figure 5** shows an identification means for association with a cartridge of the invention;
**Figure 6** shows an in vitro diagnostic system suitable for use with one or more cartridges of the invention; and
**Figure 7** shows a flow chart of one possible mode of operation of the diagnostic system of Figure 6.

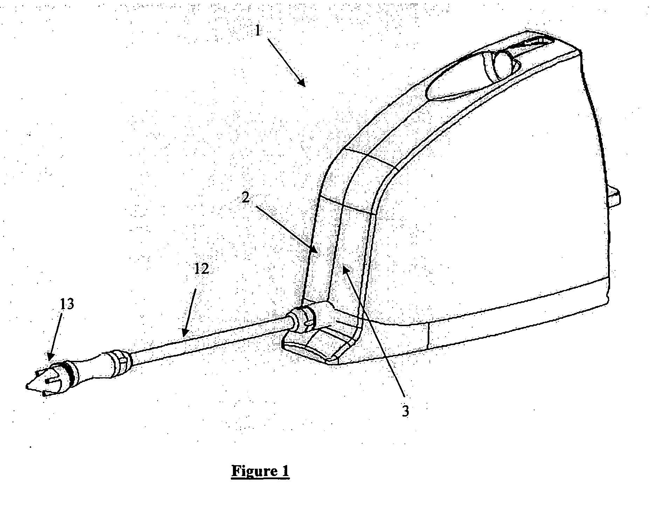

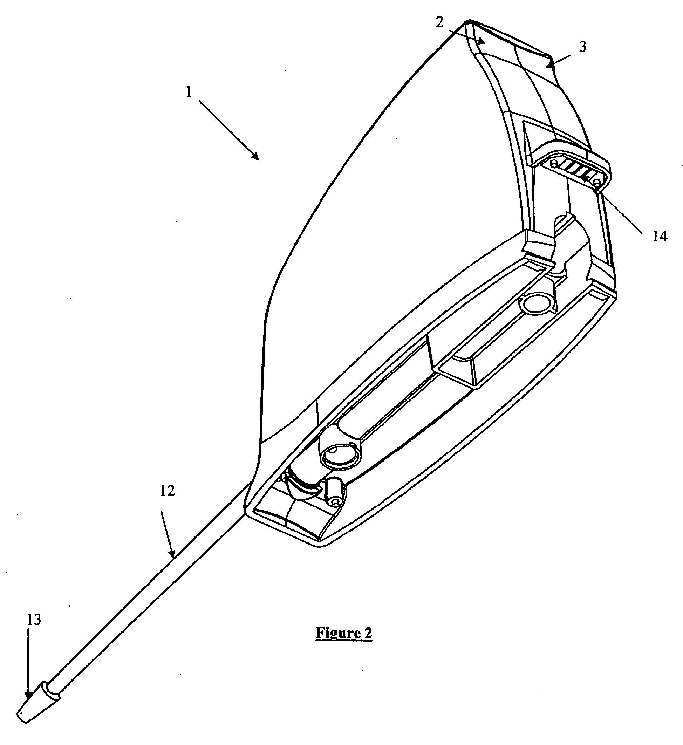

Referring to Figures 1 to 3 a disposable reagent cartridge 1 is shown, comprising a moulded plastic two-piece shell 2, 3 a reagent reservoir 4 with a one way valve 15 leading into it for filling the reservoir with reagent. Two non return valves 6, 7 lead into and out of a variable chamber 8, the size of the chamber being varied by movement of the pump piston 9 attached to a drive member 10 connectable to an external drive (not shown), via the piston shaft 11, such that when the drive member 10 is driven in one direction the piston 9 moves drawing reagent from the reservoir 4 through non return valve 6 and into chamber 8, and when the drive member 10 is driven in the other direction the piston 9 pushes the reagent out of chamber 8, through non return valve 7, down the flexible tube 12 and out of tip valve 13. The conduit 12 is flexible so that the tip valve 13 may be positioned to dispense the reagent to the required location. It will be appreciated however that this conduit need not be flexible and a rigid conduit may equally be employed or alternatively the tip valve may extend directly from the cartridge. The cartridge has an identification means comprising a read/write RFID tag 14 attached thereto which contains coded information relating to the reagent contained within the reservoir 4, for example the reagent type and, its concentration. When coupled to an in-vitro diagnostic system the system reads the information contained on the RFID tag and uses this information to dispense the required volume of reagent at the given concentration to perform diagnostic testing. An array of these cartridges would normally be present on each in-vitro diagnostic system which may dispense differing volumes of different reagents from different cartridges to perform the diagnostic test. By having information pertaining to the reagent contained on each cartridge, user errors resulting from placing a wrong reagent cartridge in a diagnostic system are eliminated. In use the diagnostic system records how much of each reagent has been used and optionally writes this information back to the RFID tag such that it is known when a reagent cartridge is expired and a signal can easily be raised for it to be replaced.

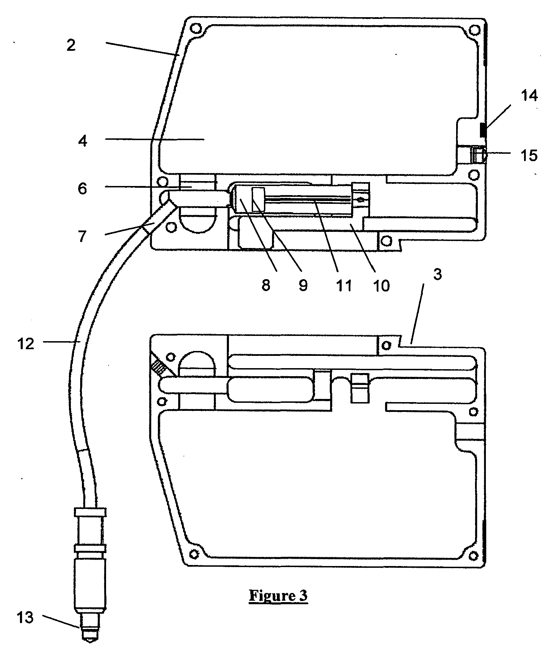

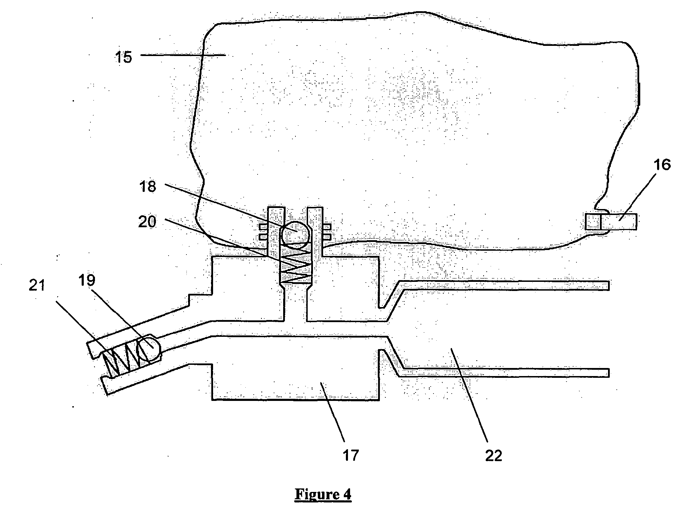

Referring to Figure 4 an element of a cartridge is shown in which the plastic housing (2, 3 of Figure 3) contain a removable element consisting of a flexible bag 15 containing a small valve 16 for filling the bag with ingredient, a plastic moulding 17 connected to the bag 15 which contains non return valves comprising of ball elements 18, 19 and springs 20, 21. The moulding 17 forms a chamber 22 in which the piston (not shown) slides drawing ingredient into and expelling ingredient from the chamber 22

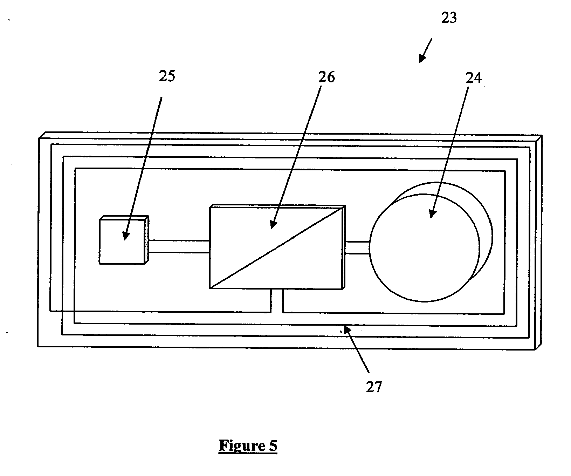

Referring to Figure 5 an example of an identification means suitable for use with the cartridge shown in Figures 1 to 4 is shown in the form of a small circuit board 23 which is attached to a cartridge (not shown). The identification means comprises four components. A battery 24, preferably a low-drain 3V lithium battery for example ECR2032 from Energizer, for supplying power to the identification means when the cartridge is in storage, a temperature sensor 25, for example a SHT15 combined temperature and humidity sensor from Sensirion AG, for monitoring the temperature at which the cartridge which the identification means is attached to is stored, a micro flash controller device 26, for example a PIC 16F639 with AFE (Analog Front-End) for 125Khz RFID control, including a real time clock, for example the MAX6900, I²C™-bus-compatible real-time clock (RTC) from Maxim Integrated Products, and an aerial 27, for example a MLX90125-CZA-B Antenna Coil from Microelectronic Integrated Systems, to enable wireless communication with an in-vitro diagnostic system. If, prior to or during use, the temperature of a cartridge goes outside a specified range for longer than a specified time frame then the micro flash controller can sense and save this information and, when the cartridge is attached to the diagnostic system, the system can read this from the cartridge and raise a warning, and / or not dispense any of the reagent from that cartridge. This can result in the prevention of false negative or false positive tests from use of reagents which have deteriorated due to storage conditions.

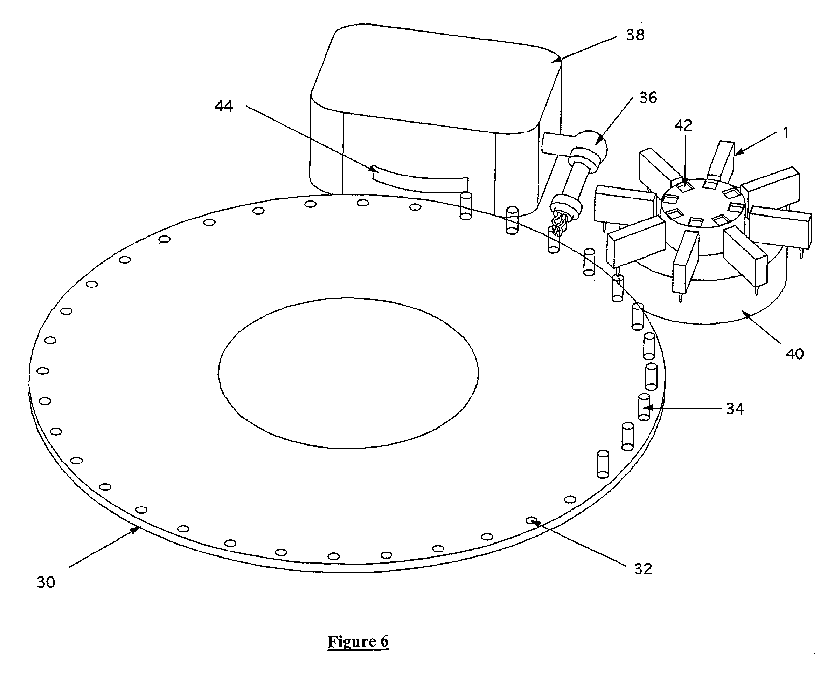

Fig. 6 shows one possible arrangement of an in vitro diagnostic system into which one or more reagent containing cartridges 1 may be placed in practice of the invention. The diagnostic system comprises a rotary table 30 having in an upper surface a circular array of openings 32 for receiving vials 34 containing fluid, such as blood plasma, that is to be diagnostically tested. The diagnostic system includes an arm 36 for placing vials 34 into the rotary table openings 32, although placement of the vials into the openings could, if desired, be accomplished manually. Control circuitry that may comprise a microprocessor or CPU (not shown) is situated in a housing 38 and is programmed to control operation of the diagnostic system and to perform diagnostic testing on the fluids in the vials 34. Alongside the rotatable table 30 is a rotatable carousel 40 that carries a number of reagent cartridges 1 of the type as described in connection with Figs. 1-5. Toward the center of the carousel 40 is a circular array of readers 42, each associated with a position for a cartridge 1 on the carousel 40 and each of which reads data contained on the identification means 14 of the cartridge 1 placed in the associated cartridge receiving position. The readers 42 communicate the data to the control circuitry in the housing 38 for verification at to whether each individual cartridge has been stored within specified storage parameters and whether the reagent contained in the cartridge is within its shelf life when the cartridge is placed in the carousel 40. Communication between the readers 42 and CPU is bidirectional and the readers also have writing capability that is used to write to the identification means 14 of each cartridge the date the cartridge is first inserted into the diagnostic system. When a diagnostic test is to be performed, the control circuitry communicates with the carousel readers 42 to verify that all required reagents are loaded in the carousel 40 and are within their storage parameters and, if so, then controls the diagnostic system to position a selected one or more of the cartridges 1 relative to a vial 34 to dispense the required reagent(s) into the test sample in the vial. Once reagent has been dispensed into a vial 34, The CPU then controls the reader 42 associated with the cartridge 1 containing the dispensed reagent to write the remaining volume of reagent in the cartridge to the identification means 14 carried by the cartridge. The system includes sensor means 44 that examines the test fluid in a vial 34 after reagent has been added to the vial, and the control circuitry then uses data provided by the sensor means to output the results of the diagnostic test that has been performed.

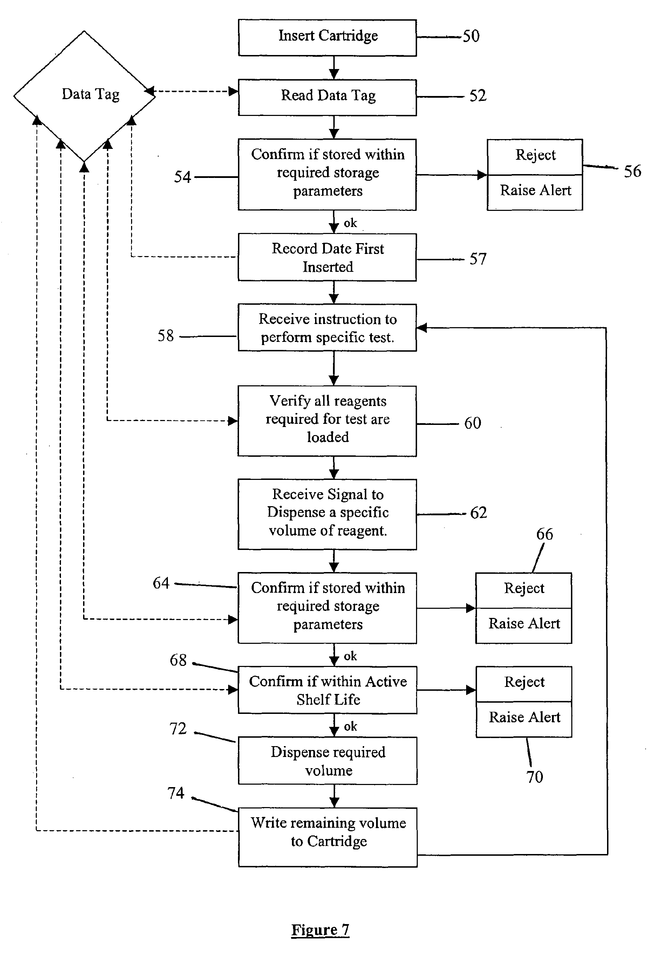

The flow chart of Fig. 7 shows one of a number of possible modes of operation of the diagnostic system which begins at a box 50 with placement of at least one cartridge 1 in the carousel 40 of the in vitro diagnostic system. The cartridge carries an identification means or data tag 14, and the data tag is read at a box 52 by the reader 42 associated with the carousel position in which the cartridge is placed. The reader communicates the data to the control circuitry contained in the housing 38 and at a box 54 the control circuitry determines whether the reagent in the cartridge has been stored within required storage parameters. If the reagent has not been so stored, at a box 56 the cartridge is rejected and an alert signal is generated, but if it has been properly stored, then at a box 57 the date of first insertion of the cartridge into the diagnostic system is recorded by being written to the cartridge data tag 14. At this point a technician, at a box 58, inputs to the diagnostic system instructions to perform a specific diagnostic test on fluid contained in a vial 34, in response to which the diagnostic system, at a box 60, reads the data tags of the one or more cartridges carried by the carousel 40 to confirm that reagent(s) required to perform the specific test are positioned on the carousel and available. If all necessary reagents are available, then at a box 62 the control circuitry determines a specific cartridge, the reagent of which is to be dispensed and, at a box 64 confirms, by reading data on the cartridge data tag 14, that the reagent has been properly stored. If it has not been properly stored, at a box 66 the reagent is rejected and an alert signal is generated. If, however, the reagent has been properly stored, then at a box 68 it is determined, by use of the associated reader 42 to read data from the cartridge data tag 14, whether the reagent is within its active shelf life and, if it is not, at a box 70 the reagent is rejected and an alert is generated. On the other hand, if the reagent is within its active shelf life, then at a box 72 the control circuitry operates the diagnostic system to dispense from the cartridge a predetermined required volume of reagent into the fluid in the vial 34, following which at a box 74 the volume of reagent remaining in the cartridge is written to the cartridge data tag 14. If additional reagent is to be dispensed, then operation of the diagnostic system returns to the box 58.

## Claims

1. A method for controlling dispense of a flowable reagent in an in-vitro diagnostic system comprising the steps of:
placing in the diagnostic system at least one cartridge comprising a reservoir of reagent and embodying identification means, said identification means comprising information pertinent to the reagent contained within the reservoir; and
the diagnostic system automatically reading the information contained within the said identification means and using the information within a control system to control the diagnostic system and dispense of the reagent;
**characterised by** the cartridge further containing a means of detecting if the temperature rises above, or falls below, one or more predetermined temperatures.

2. A method according to Claim 1 wherein the cartridge also comprises a disposable sanitary pump, whereby the reagent only contacts the disposable pump, and the diagnostic system reads information on the cartridge and uses the information within the control system to control the diagnostic system and the driving of the disposable pump for dispensing the reagent.

3. A method according to Claim 1 or Claim 2 wherein the information contained within the identification means consists of at least one of: the identification of the reagent within the cartridge; the expiry date of the cartridge, the active shelf life of the reagent (the shelf life of the reagent once the cartridge has been placed in the diagnostic system), the volume of the reagent in the reservoir, data identifying the origin of the reagent (e.g. batch number, date, location) and the maximum storage temperature of the reagent.

4. A method according to any one of Claims 1 to 3 wherein the cartridge has the identity of the reagent contained in the identification means and the diagnostic system automatically reads the identity of the contents and then associates this with the location of the cartridge thereby knowing which location to dispense a required reagent from.

5. A method according to Claim 3 or Claim 4 wherein the expiry date of the reagent is contained in the identification means and the diagnostic system automatically reads the expiry date and the control system prevents the reagent being dispensed if it is past its expiry date.

6. A method according to any one of Claims 3 to 5 wherein the identification means contains information relating to the active shelf life of the reagent and the system will not dispense reagent from a cartridge once the active shelf life has expired and the system preferably signals once the active shelf life has expired.

7. A method according to any preceding claim wherein the information contained within the identification means is permanently associated with the cartridge and is read by the diagnostic system.

8. A method according to claim 7 wherein the identification means associated with each cartridge is, or contains, a radio frequency identification (RFID) tag, and the diagnostic system contains a reader for reading the RFID tag.

9. A method according to Claim 8 wherein a plurality of cartridges are placed in the diagnostic system and each position in the system capable of receiving a cartridge has a reader associated with it and only detects and reads information from the RFID tag on a cartridge when it is in close proximity to the reader, for example the reader preferably includes a short range reader circuit optionally having an operating range limited to a few centimetres such that the reader does not communicate with the cartridge, and therefore does not read the information contained within the tag on the cartridge, until the cartridge is substantially inserted into the diagnostic system.

10. A method according to Claim 9 wherein the short range reader circuit has a single operating frequency, preferably above 13MHz thereby enabling the use of a low powered reader circuit.

11. A method according to Claim 7 wherein the information is initially written onto the identification means permanently associated with the cartridge and the diagnostic system includes a reader/writer such that the diagnostic system can read the information on the cartridge and then write new information, or overwrite existing information back to the cartridge wherein the identification means is preferably a "universal data tag" comprising memory and/or processor electronics, and is attached to the cartridge and conforms to a predetermined physical size independent of its electronic and/or connective functionality, for example the tag optionally consists of a printed circuit board on which the memory and/or processor electronics are provided, the printed circuit board being capable of encompassing a range of different connection methods for communicating with the reader/writer.

12. A method according to Claim 11 wherein the printed circuit board contains a printed 1000µH inductor for inductive non contact connection between the memory and/or processor electronics and the reader/writer, allowing for the use of radio frequency identification (RFID) type devices ranging from 125 kHz to 13.56 kHz operating frequency and the printed circuit board is preferably a double sided board, having the inductor mounted on one side and the memory and/or processor electronics mounted on the other.

13. A method according to Claim 11 wherein the printed circuit board has a plurality of contact pads for contacting with physical spring contacts on the diagnostic system, enabling the diagnostic system to read and write information from and to the tag on the disposable cartridge.

14. A method according to any one of Claims 11 to 13 wherein the memory and/or processor electronics comprises an electronic chip means in the form of an Electro-Erasable-Programmable-Read Only Memory (EEPROM) chip.

15. A method according to Claim 14 wherein the EEPROM has four contacts: a ground, a positive volts in and two signal contacts and a number of independent pieces of information may be read from and programmed to the EEPROM in a serial addressed manner.

16. A method according to Claim 14 wherein the electronic chip means is a two contact EEPROM having the ability to generate its own supply by charging an internal capacitor from the positive voltage sing from the read write data sent to the electronic chip means.

17. A method according to any one of Claims 11 to 16 wherein the tag can be used in an active role wherein a small central processor is used in combination with a battery power source and the battery is preferably a separate component located on the disposable cartridge and the circuit board contains contacts to connect to the battery or the battery is an integral part of the circuit board.

18. A method according to Claim 7 wherein the information is stored in magnetic form, for example on a read/write magnetic strip.

19. A method according to any one of Claims 11 to 18 wherein the diagnostic system initially reads the volume of the reservoir, and then as the reagent is used, calculates the volume remaining and writes this information back to the identification means.

20. A method according to Claim 19 wherein the diagnostic system writes the remaining volume to the identification means every time some of the reagent is used.

21. A method according to Claim 19 wherein the diagnostic system calculates the volume of reagent remaining as it is used, and, when the cartridge is to be removed from the system, writes this back to the identification means prior to the cartridge being removed.

22. A method according to any one of Claims 11 to 21 wherein the diagnostic system reads the active shelf life of the reagent when the cartridge is first inserted into the diagnostic system, and using the date of insertion and the active shelf life calculates the active expiry date and writes this back to the identification means, and the diagnostic system preferably will not dispense any more reagent from a particular cartridge once the active expiry date has passed.

23. A method according to Claim 7 wherein the information is stored on a bar code.

24. A method according to any preceding Claim wherein the means of detecting the temperature, and recording if it rises above, or falls below, one or more predetermined temperatures comprises part of the identification means, and rising above, or falling below, one or more predetermined temperatures will influence the signal received when the dispenser reads the identification means when the cartridge is located within the diagnostic system.

25. A method according to Claim 24 wherein the cartridge contains a dedicated circuit, containing a thermal fuse or an electronic temperature monitoring component, associated with the identification means.

26. A method according to Claim 24 or Claim 25 wherein the cartridge contains a clock which calculates the time period for which the cartridge is stored above or below one or more of the predetermined temperatures

27. A method according to Claim 24 wherein the identification means is a magnetic means and it looses a part of its magnetic coding above or below a certain temperature.
